# EUROPÄISCHE PATENTSCHRIFT

(11) **EP 0 607 631 B1**
(45) Veröffentlichungstag und Bekanntmachung des Hinweises auf die Patenterteilung: **12.03.1997**
(21) Anmeldenummer: 93203478.8
(22) Anmeldetag: 10.12.1993
(51) Int. Cl.: F16L 55/033

(54) **Verfahren und Vorrichtung zur Schalldämpfung an Rohrleitungen**
Method and sound damping device for pipes
Procédé et dispositif d'insonorisation pour tuyaux

(30) Priorität: 21.12.1992 DE 4243280
(43) Veröffentlichungstag der Anmeldung: 27.07.1994
(73) Patentinhaber: dB-Tec Schallschutz GmbH, 70329 Stuttgart (DE)
(72) Erfinder: Strassen, Werner, Dipl.-Ing., D-40882 Ratingen (DE); Fischer, Andreas, D-41542 Dormagen (DE); Graefenstedt, Michael, Dr., D-51465 Bergisch Gladbach (DE); Obst, Hans, D-50129 Bergheim (DE)

(56) Entgegenhaltungen:
- DE-U- 8 803 634
- GB-A- 493 538
- GB-A- 2 253 076
- US-A- 2 043 030

## Beschreibung

Die Erfindung betrifft ein Verfahren zur Reduzierung der Schallemission an einer offenen, schallabstrahlenden Austrittsöffnung einer Rohrleitung mit Hilfe eines Pfeifenresonators, der eine zur Austrittsöffnung konzentrische, einseitig akustisch offene, rechteckige oder zylindrische Kammer mit einer Kammerlänge und einer dazu senkrechten, akustisch geschlossenen Rückwand sowie eine Halterung zur Befestigung des Pfeifenresonators auf der Rohrleitung aufweist.

Die Erfindung betrifft auch einen Pfeifenresonator zur Reduzierung von Schallwellen an der Austrittsöffnung einer schallführenden Rohrleitung mit einem Durchmesser, der eine zur Austrittsöffnung konzentrische, einseitig akustisch offene, rechteckige oder zylindrische Kammer mit einer Kammerlänge, einem Querschnitt und einer dazu senkrechten, akustisch geschlossenen Rückwand sowie eine Halterung zur Befestigung des Pfeifenresonators auf der Rohrleitung aufweist.

In der Literatur werden verschiedene Typen von Resonanzschalldämpfern zur Reduzierung der Schallemission beschrieben (s. z.B. H. Schmidt, Schalltechnisches Taschenbuch; 4. Auflage Düsseldorf 1989). Ein spezieller Resonatortyp ist der sogenannte Pfeifenresonator, dessen Wirkungsweise auf einer Interferenz zwischen der ankommenden Schallwelle in der Rohrleitung und einer reflektierten Schallwelle beruht. Die Reflexion findet dabei in einer an die Rohrleitung angekoppelten Resonatorkammer mit zwei akustisch geschlossenen Stirnwänden statt, die einander annähernd parallel gegenüberstehen.

Das Problem der Reduzierung der Schallemission bei schallabstrahlenden Austrittsöffnungen stellt sich in der Industrie bei lärmerzeugenden Maschinen, die mit Kühlluft- oder Abluftleitungen versehen sind, wobei sich die schallabstrahlenden Öffnungen in der Regel außerhalb des Gebäudes befinden und in der Nähe befindliche Siedlungen durch den austretenden Lärm gestört werden. Bisher sind keine praktikablen technischen Lösungen bekannt, die mit geringem apparativen Aufwand ohne Betriebsstillstand zu realisieren sind und auch von weniger gut geschultem Personal angeliefert, berechnet und montiert werden können. Eine wichtige Rolle spielt dabei vor allem die problemlose Nachrüstung von bereits vorhandenen Anlagen.

Aus dem britischen Patent Nr. 493, 538 (nachfolgend D 1) ist beispielsweise eine Vorrichtung zur Reduzierung von Schallwellen an der Austrittsöffnung einer schallführenden Rohrleitung bekannt, die ähnlich ausgestaltet ist, wie ein Pfeifenresonator. Die bekannte Vorrichtung weist eine einseitig akustisch offene zylindrische Kammer auf, die zur Austrittsöffnung der Rohrleitung konzentrisch angeordnet ist. Der Durchmesser der Kammer ist größer als der Durchmesser der Rohrleitung, während die Länge der Kammer in den einzelnen bekannten Ausführungsformen unterschiedlich ist. Die Kammer weist eine akustisch geschlossene Rückwand auf, die zur Austrittsöffnung der Rohrleitung senkrecht und in einem axialen Abstand dazu angeordnet ist. Mit Hilfe einer Halterung ist die bekannte Vorrichtung an der Rohrleitung befestigt.

Zwischen der akustisch geschlossenen Rückwand und der Austrittsöffnung der Rohrleitung ist eine Wand oder Schicht aus einem schallabsorbierenden Material angeordnet, welche die gesamte Rückwand bedeckt und von einem akustisch offenen Gitter oder Gaze gehalten wird. Jener Anteil des Schalles, der von der Wand nicht absorbiert wird, wird in einer Richtung abgestrahlt, die entgegengesetzt ist zu der Richtung, aus der der Schall ursprünglich kam. Zur möglichen Absorbtion dieses nicht absorbierten und reflektierten Anteils des Schalles ist in einer weiteren Ausführungsform der bekannten Vorrichtung eine zweite Wand oder Schicht aus schallabsorbierendem Material vorgesehen, die dem akustisch offenen Ende gegenüberliegend und in axialem Abstand davon vorgesehen ist.

Abgesehen davon, daß in D 1 keinerlei Hinweis darauf enthalten ist, in welchem axialen Abstand die akustisch geschlossene Rückwand zur Austrittsöffnung der Rohrleitung angeordnet werden soll, so fehlt auch jeder Hinweis über die Länge der Kammer, um aus der bekannten Vorrichtung einen wirklichen Pfeifenresonator zu machen, der dazu geeignet ist, eine Schalldämmung nach dem Prinzip der Reflexion, wo Wellenberge und Wellentäler der ankommenden und reflektierten Schallwellen einander aufheben, herbeizuführen.

Weiterhin ist aus dem deutschen Gebrauchsmuster G 88 03 634.0 (nachfolgend D 2) ein "Schalldämpfer für strömende Gase in Lüftungs- und Klimaanlagen" bekannt. Der bekannte Schalldämpfer besteht aus auf tiefe Frequenzen abgestimmten Rohrresonatoren, die als Schalldämpfer-Kulissen in einem Kanalabschnitt der Lüftungs- und Klimaanlagen eingesetzt sind. Die bekannten Rohrresonatoren arbeiten als λ/4-Resonatoren, also auch auf dem Prinzip der Reflexion von Schallwellen.

Hier setzt die Erfindung an. Es liegt die Aufgabe zugrunde, mit möglichst geringem apparativen Aufwand eine Vorrichtung zur Schalldämmung an Rohrleitungen mit einer schallabstrahlenden Austrittsöffnung nach dem Prinzip eines Resonanzschalldämpfers zu entwickeln, die einen hohen Wirkungsgrad (große Schalldämmung) besitzt und im Bedarfsfall schnell und einfach montiert werden kann, ohne vorher schalltechnische Analysen durchzuführen (z.B. Messung des Schallspektrums).

Diese Aufgabe wird durch ein Verfahren der eingangs genannten Art gelöst, bei dem man zur Reduzierung von Schallemissionen im Frequenzbereich zwischen 100 s⁻¹ und 1000 s⁻¹ bei Rohrleitungsdurchmessern zwischen 100 mm und 500 mm einen Pfeifenresonator auswählt, dessen
- Querschnitt das 1,2 fache bis 20 fache des Rohrleitungsquerschnitts beträgt und dessen
- Kammerlänge zwischen 16 cm und 3 m liegt, und daß man
- den axialen Abstand zwischen der Austrittsöffnung und der akustisch geschlossenen Rückwand in einem Längenbereich zwischen λ/4 und einem ungeradzahligen Vielfachen von λ/4 der Hauptwellenlänge λ der Schallemission einstellt.

Zur Durchführung des Verfahrens in einem Frequenzbereich der Schallwellen zwischen 100 s⁻¹ und 1000 s⁻¹ und bei Rohrleitungsdurchmessem zwischen 100 und 500 mm ist ein Pfeifenresonator geeignet, bei dem
- der Querschnitt der Kammer das 1,2 fache bis 20 fache des Rohrleitungsquerschnitts beträgt,
- die Kammerlänge im Bereich zwischen 16 cm bis 3 m liegt und
- der axiale Abstand zwischen der Austrittsöffnung und der akustisch geschlossenen Rückwand in einem Längenbereich λ/4 der Hauptwellenlänge λ der Schallemission zwischen 0,08 m bis 1 m mittels der Halterung einstellbar ist.

Unter "Hauptwellenlänge" wird dabei die Wellenlänge verstanden, bei der das Intensitätsmaximum der Schallabstrahlung einer in einem relativ schmalen Frequenzbereich emittierenden Schallquelle liegt. Bei der Reduzierung der Schallabstrahlung von Ventilatorauslässen ist z.B. die Hauptwellenlänge durch die Drehzahl und Schaufelzahl des Ventilators vorgegeben. Als "akustisch geschlossen" werden Wände oder Platten mit einem längenspezifischen Strömungswiderstand von mehr als 500 kNs/m⁴ bezeichnet. Beispiele dafür sind Stahlblech, Mauerwerk, Folien, Glas etc. Demgegenüber werden Platten bzw. Wände mit einem längenspezifischen Strömungswiderstand ≤ 500 kNs/m⁴ als "akustisch offen" bezeichnet. Akustisch offen in diesem Sinne sind z.B. Mineralwolle, Lochbleche etc.

Die akustisch geschlossene Rückwand des Pfeifenresonators ist bevorzugt gegenüber der schallabstrahlenden Austrittsöffnung angeordnet. Alternativ kann der Pfeifenresonator auch in der Weise angebracht werden, daß die Rohrleitung durch die akustisch geschlossene Rückwand hindurch in den Pfeifenresonator hineinragt.

Eine weitere Variante besteht darin, daß der Pfeifenresonator so an der Rohrleitung fixiert wird, daß die schallabstrahlende Austrittsöffnung außerhalb des Pfeifenresonators angeordnet ist.

Eine Weiterentwicklung der Erfindung besteht darin, daß bei Schaltquellen mit zeitlich veränderlicher Hauptwellenlänge ein Regelkreis mit einem Sensor zur Messung der Hauptwellenlänge und einem Stellglied zur selbsttätigen Nachstellung der Pfeifenresonatorposition vorgesehen ist.

Mit der Erfindung werden folgende Vorteile erzielt:
- Bei allen Lärmquellen mit ausgeprägter Abstrahlung in einem bestimmten Frequenzbereich kann eine hochwirksame Schalldämmung (bis zu 30 dB im Einzelton) erreicht werden. Die Vorrichtung kann vor Ort mit wenigen Handgriffen auch von weniger gut geschultem Personal zusammengebaut, schalltechnisch eingestellt (d.h. auf den der Hauptwellenlänge entsprechenden Frequenzbereich eingestellt) und montiert werden. Überraschenderweise hat es sich dabei gezeigt, daß sich der Pfeifenresonator vor Ort empirisch, d.h. nur aufgrund der subjektiv empfundenen Lautstärke optimal abstimmen und einstellen läßt. Bisher mußte zur Dimensionierung des Schalldämpfers das Schallemissionsspektrum gemessen werden. Zur Anbringung und optimalen Einstellung des neuen Schalldämpfers ist daher kein Schallschutz-Fachpersonal erforderlich.
- Die neue Vorrichtung besteht aus nur wenigen Teilen, so daß der Konstruktions-, Herstellungs- und Montageaufwand vermindert wird. Es ist auch eine einfache Nachrüstung von bereits vorhandenen Anlagen möglich.
- Ferner kann der neue Schalldämpfer auch ohne weiteres bei produktbelasteten Gasströmen (Strömungsgeschwindigkeit in der Rohrleitung bis 100 m/sec) eingesetzt werden. Bei der Auswahl des Werkstoffes ist man nicht an schalltechnische Kriterien gebunden. Vielmehr kann die Auswahl nach korrosions oder verfahrenstechnischen Gesichtspunkten erfolgen. Auf diese Weise ist eine lange Haltbarkeit gewährleistet.
- Im Gegensatz zu bisher bekannten Schalldämpfern, die nach dem Absorptionsprinzip arbeiten, sind keine offenporigen oder faserigen Werkstoffe (z.B. Mineralwolle) erforderlich. Auf diese Weise treten auch keine Entsorgungsprobleme auf.
- Bei der Ausführung des Resonanzschalldämpfers mit geregelter Nachstellung und Abstimmung paßt sich der Schalldämpfer automatisch an verschiedene Betriebszustände der schallabstrahlenden Anlage an.
- Besonders bewährt hat sich der neue Schalldämpfer bei der Reduzierung der Schallemission von Auslässen mit einem Rohrleitungsdurchmesser zwischen 100 mm und 500 mm im Frequenzbereich zwischen 100 s⁻¹ und 500 s⁻¹. Die Schalldämpfereinzelteile können für solche Anwendungen vorsorglich auf Lager gelegt werden, so daß sie beim Auftreten von Einzeltönen in diesem Frequenzbereich schnell montiert werden können, ohne die Produktionsanlage still zu legen.
- Ein wichtiger Aspekt besteht ferner darin, daß durch den Einbau des neuen Schalldämpfers der Strömungswiderstand der Leitung am Auslaß je nach Ausführung nur unwesentlich vergrößert wird.

Im folgenden wird die Erfindung anhand von Ausführungsbeispielen und Zeichnungen näher erläutert.

Es zeigen:
Figur 1 die Anordnung eines Pfeifenresonators zur Schalldämpfung am Rohrende, wobei die akustisch geschlossene Rückwand des Pfeifenresonators der Austrittsöffnung gegenübersteht,
Figur 2 eine alternative Form der Anbringung des Pfeifenresonators, wobei die Rohrleitung durch die akustisch geschlossene Rückwand des Pfeifenresonators hindurchgeführt ist,
Figur 3 eine weitere Variante der Anbringung, bei der sich die Austrittsöffnung der Rohrleitung außerhalb des Pfeifenresonators befindet, und
Figur 4 eine Ausführung, bei der die optimale Einstellung und Abstimmung des Pfeifenresonators bei veränderlichen Betriebszuständen der schallerzeugenden Anlage automatisch nachgeregelt wird.

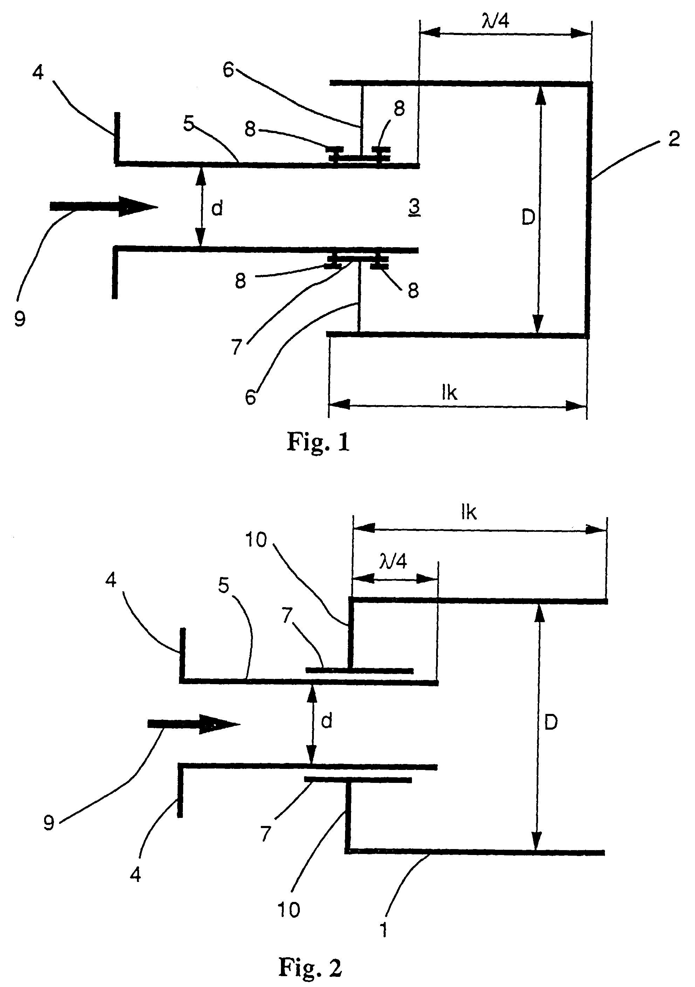

Gemäß Figur 1 ist ein aus einer einseitig geschlossenen, zylindrischen oder rechteckigen Kammer 1 bestehender Pfeifenresonator mit seiner Rückwand 2 gegenüber der Austrittsöffnung 3 einer schallführenden Rohrleitung angeordnet. Um eine einfache Montage zu ermöglichen, wird auf den eigentlichen Auslaß der Rohrleitung mittels des Flansches 4 ein kurzes Rohrstück 5 aufgesetzt, an dessen Ende sich die schallabstrahlende Austrittsöffnung 3 befindet. Der Pfeifenresonator 1 ist mittels radialer Stege 6 an einer axial verschiebbaren Halterung 7 befestigt. Im einfachsten Fall kann der Pfeifenresonator auch direkt am Auslaß (Rohrleitungsende) montiert werden. Die Halterung 7 kann mittels der Klemmschrauben 8 am Rohrende oder am Rohrstück 5 fixiert werden. Auf diese Weise kann der Abstand zwischen der schallabstrahlenden Austrittsöffnung 3 und der Rückwand 2 des Pfeifenresonators 1 bequem variiert werden. Hinsichtlich der Rückwand 2 des Pfeifenresonators 1 wird lediglich die Forderung gestellt, daß es sich um eine akustisch geschlossene Wand handelt. Unter "akustisch geschlossen" werden Grenzflächen mit einem Strömungswiderstand von mehr als 500 kNs/m⁴ verstanden. Beispiele dafür sind Stahlblech, Mauerwerk, Folien, Glas etc. Umgekehrt werden Grenzflächen mit einem längenspezifischen Strömungswiderstand kleiner als 500 kNs/m⁴ als "akustisch offen" bezeichnet. Beispiele für akustisch offene Grenzflächen sind z.B. Mineralwolleschichten, Lochbleche etc.

Im vorliegenden Fall wird vorausgesetzt, daß die Schallwellen 9, die sich durch die Rohrleitung fortpflanzen, im wesentlichen bei einer Frequenz liegen oder zumindest ein ausgeprägtes Maximum in einem bestimmten Frequenzbereich besitzen. Manchmal wird aber auch eine ganz bestimmte Frequenz als besonders störend empfunden. Die zu diesen Frequenzen gehörende Wellenlänge der Schallwellen wird hier definitionsgemäß als "Hauptwellenlänge" bezeichnet. Der Pfeifenresonator 1 ist nur wirksam, wenn er auf diese Hauptwellenlänge abgestimmt ist. Die physikalische Bedingung für die Abstimmung besteht darin, daß der Abstand zwischen der Austrittsöffnung 3 und der Pfeifenresonator-Rückwand 2 in erster Näherung = λ/4 ist, wobei λ die Hauptwellenlänge ist. Wenn die Länge des Pfeifenresonators genauer festgelegt werden soll, muß der Pfeifenresonator um die sogenannte Mündungskorrektur (ca. 10 %) verkürzt werden. In der Praxis erfolgt die Auslegung und Abstimmung in der Weise, daß aus einem lagerhaltigen Satz von Pfeifenresonatoren mit abgestufter Länge ein Exemplar mit ausreichender Länge ausgewählt, mittels der Halterung 7 montiert und solange längs des Rohrstückes 5 verschoben wird, bis die im Umfeld des Auslasses noch hörbare Restschallintensität der störenden Frequenz auf ein Minimum reduziert ist. Diese Einstellung kann erfahrungsgemäß ohne weiteres auch durch weniger gut geschultes Service-Personal erfolgen.

Bei der Anordnung gemäß Figur 2 ist das Rohrstück 5 durch die akustisch geschlossene Rückwand 10 des Pfeifenresonators 1 hindurchgeführt und ragt ein Stück weit in den Pfeifenresonator hinein. In diesem Fall befindet sich die Austrittsöffnung 3 der Rohrleitung 5 gegenüber im offenen Ende des Pfeifenresonators. Der Resonator ist abgestimmt (analog zur Ausführung nach Figur 1), wenn der Abstand zwischen der Austrittsöffnung 3 und der akustisch geschlossenen Rückwand ca. λ/4 beträgt.

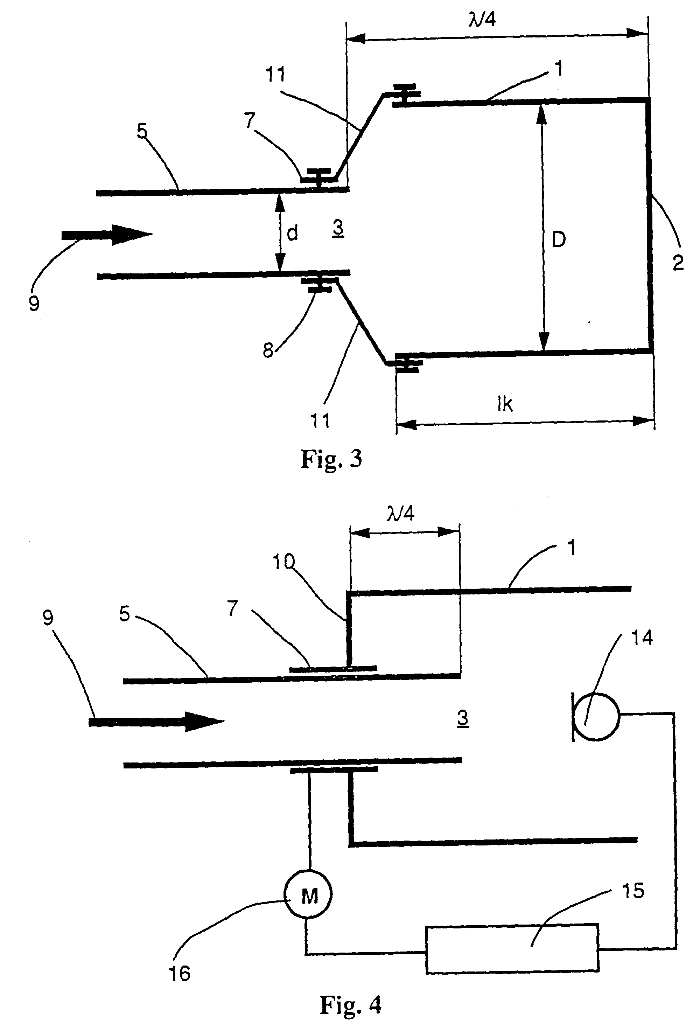

Eine weitere Ausführungsform ist in Figur 3 dargestellt. Im Gegensatz zu Figur 1 befindet sich hier die Austrittsöffnung 3 des Rohrstückes 5 außerhalb des Pfeifenresonators 1. Die Befestigung an der längs des Rohrstückes 5 verschiebbaren Halterung 7 erfolgt mittels der korbähnlich angeordneten Traversen oder Stege 11. Analog zu Figur 1 ist der Pfeifenresonator abgestimmt, wenn der Abstand zwischen der Schallaustrittsöffnung 3 und der akustisch geschlossenen Rückwand 2 wiederum ca. λ/4 beträgt. Die Arretierung in der Abstimmungs-Position erfolgt, wie bei den anderen Ausführungsformen, durch Festziehen der Schrauben 8.

Eine weitere Variante besteht darin, daß bei der Ausführung nach Figur 1 an der offenen Seite des Pfeifenresonators eine akustisch offene Wand eingesetzt wird. In ähnlicher Weise kann die offene Seite des Pfeifenresonators bei der Ausführung nach Figur 2 mit einer akustisch offenen Wand abgeschlossen werden.

Eine Weiterentwicklung der Erfindung mit automatischer Abstimmung des Pfeifenresonators ist in Figur 4 dargestellt. Zu diesem Zweck ist ein Regelkreis vorgesehen, der aus einem Mikrofon 14, einem Schallanalysator und Regler 15 und einem Motor 16 (Stellglied) zur axialen Verschiebung des Pfeifenresonators 1 längs des Rohrstückes 5 besteht. Der Pfeifenresonator ist in der gleichen Position abgestimmt wie bei der Ausführung nach Figur 2. Das Mikrofon 14 erzeugt ein elektrisches Schallsignal, das im Analysator 15 zur Bestimmung der Hauptwellenlänge λ weiterverarbeitet wird. Verändert sich die Hauptwellenlänge λ während des Betriebes, so wird der Pfeifenresonator 1 durch den Motor 16 mittels eines Zahnstangenantriebes (nicht gezeigt) soweit verfahren, bis das Abstimmungskriterium wieder erfüllt ist. Auf diese Weise wird der Pfeifenresonator auch bei wechselnden Betriebszuständen (veränderliche Hauptwellenlänge!) stets optimal abgestimmt.

Hinsichtlich der Dimensionierung des Pfeifenresonators 1 haben sich in der Praxis folgende Kriterien bewährt:
1. Der Pfeifenresonator wird für Resonanzfrequenzen zwischen 100 s⁻¹ und 1.000 s⁻¹ ausgelegt. Dementsprechend beträgt der Abstand λ/4 = 0,08 m bis 1 m.
2. Der Querschnitt des Pfeifenresonators beträgt das 1,2-fache bis 20-fache des Rohrleitungsquerschnitts (Rohrstück 5). Dementsprechend wird das Verhältnis von D/d gewählt.
3. Die Kammerlänge lₖ liegt im Bereich von 16 cm bis 3 m.
4. Der Pfeifenresonator wird normalerweise aus Stahlblech hergestellt. Es kann aber auch Kunststoff, z.B. Hart-PVC, verwendet werden um Gewicht zu sparen.

## Patentansprüche

1. Verfahren zur Reduzierung der Schallemission an einer offenen, schallabstrahlenden Austrittsöffnung (3) einer Rohrleitung mit Hilfe eines Pfeifenresonators, der eine zur Austrittsöffnung konzentrische, einseitig akustisch offene, rechteckige oder zylindrische Kammer (1) mit einer Kammerlänge und einer dazu senkrechten, akustisch geschlossenen Rückwand sowie eine Halterung (7) zur Befestigung des Pfeifenresonators auf der Rohrleitung aufweist, dadurch gekennzeichnet, daß man zur Reduzierung von Schallemissionen im Frequenzbereich zwischen 100 s⁻¹ und 1 000 s⁻¹ bei Rohrleitungsdurchmessern (d) zwischen 100 mm und 500 mm einen Pfeifenresonator auswählt, dessen
- Querschnitt (D) das 1,2fache bis 20fache des Rohrleitungsquerschnitts (d) beträgt und dessen
- Kammerlänge (lₖ) zwischen 16 cm bis 3 m liegt, und daß man
- den axialen Abstand zwischen der Austrittsöffnung (3) und der akustisch geschlossenen Rückwand (2, 10) in einem Längenbereich zwischen λ/4 und einem ungeradzahlig Vielfachen von λ/4 der Hauptwellenlänge λ der Schallemission einstellt.

2. Pfeifenresonator zur Reduzierung von Schallwellen (9) an der Austrittsöffnung (3) einer schallführenden Rohrleitung (5) mit einem Durchmesser (d), der eine zur Austrittsöffnung (3) konzentrische, einseitig akustisch offene, rechteckige oder zylindrische Kammer (1) mit einer Kammerlänge (lₖ), einem Querschnitt (D) und einer dazu senkrechten, akustisch geschlossenen Rückwand (2, 10) sowie eine Halterung (7) zur Befestigung des Pfeifenresonators auf der Rohrleitung (5) aufweist, dadurch gekennzeichnet, daß in einem Frequenzbereich der Schallwellen (9) zwischen 100 s⁻¹ und 1 000 s⁻¹ und bei Rohrleitungsdurchmessern (d) zwischen 100 mm und 500 mm
- der Querschnitt (D) der Kammer (1) das 1,2fache bis 20fache des Rohrleitungsquerschnitts (d) beträgt,
- die Kammerlänge (lₖ) im Bereich zwischen 16 cm bis 3 m liegt und
- der axiale Abstand zwischen der Austrittsöffnung (3) und der akustisch geschlossenen Rückwand (2, 10) in einem Längenbereich λ/4 der Hauptwellenlänge λ der Schallemission (9) zwischen 0,08 m bis 1 m mittels der Halterung (7) einstellbar ist.

3. Pfeifenresonator nach Anspruch 2, dadurch gekennzeichnet, daß die akustisch geschlossene Rückwand (2) der schallabstrahlenden Austrittsöffnung (3) gegenüberliegend angeordnet ist.

4. Pfeifenresonator nach Anspruch 2, dadurch gekennzeichnet, daß die Rohrleitung (5) durch die akustisch geschlossene Rückwand (10) hindurch in die Kammer (1) hineinragt.

5. Pfeifenresonator nach Anspruch 3, dadurch gekennzeichnet, daß das akustisch offene Ende der Kammer (1) in einem axialen Abstand vor der schallabstrahlenden Austrittsöffnung (3) angeordnet ist.

6. Pfeifenresonator nach einem der Ansprüche 2 bis 5, dadurch gekennzeichnet, daß bei Schallwellen (9) mit veränderlicher Hauptwellenlänge (λ) ein Regelkreis mit einem Sensor (14) zur Messung der Hauptwellenlänge (λ) und einem Stellglied (16) zur selbsttätigen Einstellung des axialen Abstands (λ/4) zwischen der schallabstrahlenden Austrittsöffnung (3) und der akustisch geschlossenen Rückwand (2, 10) vorgesehen ist.

## Claims

1. A method for the damping of sounds emanating from the open end (3) of a noise-conducting tube by means of a sound damping device, that is disposed concentrically to the open end of the tube and has an one-side acoustically open rectangular or cylindrical chamber (1) with a chamber-length and a perpendicular acoustically close rear-wall and has also an attachment (7) to adjust the device on the tube, characterized thereby, that for the damping of sounds within a frequency-range between 100 s⁻¹ and 1.000 s⁻¹ for tube-diameters (d) between 100 mm and 500 mm a device is to be selected,
- the diameter (D) of which is comprised between 1,2 and 20 times of the diameter (d) of the open end of the tube,
- the chamber-length (l_{K}) of which is comprised between 16 cm and 3 m, and
- the axial distance between the open end (3) of the tube and the acoustically close rear-wall (2, 10) being adjustable within a distance of λ/4 and an uneven-numbered multiplicity of λ/4 of the main wave-length (λ) of the emitted sounds.

2. A sound damping device for the damping of sounds (9) emanating from the open end (3) of a noise-conducting tube (5) of a diameter (d), disposed concentrically to the open end (3) of the tube (5) and having a rectangular or cylindrical chamber (1) that is acoustically open on one side, with a chamber-length (l_{K}), a diameter (D) and a perpendicular acoustically close rear-wall (2, 10) and also having an attachment (7) to adjust the device on the tube (5), characterized thereby, that within a frequency-range of the sounds (9) between 100 s⁻¹ and 1.000 s⁻¹ and for diameters (d) of the tube (5) between 100 mm and 500 mm
- the diameter (D) of the chamber (1) is comprised between 1,2 and 20 times of the diameter (d) of the tube (5),
- the length (lₖ) of the chamber (1) is comprised between 16 cm and 3 m, and
- the axial distance between the open end (3) of the tube (5) and the acoustically close rear-wall (2, 10) is adjustable by means of the attachment (7) within a range (λ/4) of the maine wave-lengths (λ) of the sounds (9) between 0,08 m and 1 m.

3. A sound damping device according claim 2, characterized thereby, that the acoustically close rear-wall (2) is disposed opposite the open end (3) of the tube (5).

4. A sound damping device according claim 2, characterized thereby, that the tube (5), penetrating the acoustically close rear-wall (10), ends within the chamber (1).

5. A sound damping device according claim 3, characterized thereby, that the acoustically open end of the chamber (1) is disposed in an axial distance in front of the noise-emitting open end (3) of the tube (5).

6. A sound damping device according either one of the claims 2 to 5, characterized thereby, that for sounds (9) of variable main wave-lengths (λ) there is provided a control-circuit with a sensor (14) to measure the main wave-lengths (λ), and a member (16) for the automatic adjustment of the axial distance (λ/4) between the noise-emitting open end (3) of the tube (5) and the acoustically close rear wall (2, 10).

## Revendications

1. Procédé d'insonorisation des bruits émis par le bout ouvert d'un tuyau conduisant les bruits par intermédiare d'un dispositif d'insonorisation comprenant une chambre (1) d'un côté acoustiquement ouverte, rectangulaire ou cylindrique à une longueur de chambre et une parois arrière perpendiculaire acoustiquement close et un ajustement (7) pour le support du dispositif d'insonorisation sur le tuyau, caractérisé en ce, que pour l'insonorisation de bruits émis dans une portée de fréquence entre 100 s⁻¹ et 1.000 s⁻¹ par tuyaux d'un diamètre entre 100 mm et 500 mm on sélectionne un dispositif d'insonorisation dont
- le diamètre (D) est compris entre 1,2 et 20 fois du diamètre (d) du tuyau,
- la longueur (l_{K}) de chambre est comprise entre 16 cm et 3 m, et
- qu'on ajuste la distance axiale entre le bout ouvert (3) du tuyau (5) et la parois arrière (2,10) acoustiquement close dans une portée entre λ/4 et une multiplicité de nombre inégal de λ/4 de la longuer d'onde (λ) principale des bruits émis.

2. Dispositif d'insonorisation de bruits (9) émis par le bout (9) ouvert d'un tuyau (5) conduisant les bruits (9) d'un diamètre (d), disposant d'une chambre (1) d'un côté acoustiquement ouverte, rectangulaire ou cylindrique à une longueur (l_{K}) de chambre , un diamètre (D) et d'une parois arrière perpendiculaire et acoustiquement close et d'un ajustement (7) pour le support du dispositif sur le tuyau, caractérisé en ce, que dans une portée de fréquence des bruits (9) entre 100 s⁻¹ et 1.000 s⁻¹ et pour diamètres (d) de tuyau entre 100 mm et 500 mm
- le diamètre (D) de la chambre (1) est compris entre 1,2 et 20 fois du diamètre (d) du tuyau,
- la longueur (lₖ) de la chambre (1) est comprise entre 16 cm et 3 m, et
- la distance axiale entre le bout (3) ouvert du tuyau et la parois (2,10) arrière acoustiquement close est réglable par intermédiaire de l'ajustement (7) dans une portée (λ/4) de la longueur d'onde (λ) principale des bruits (9) entre 0,08 m et 1 m.

3. Dispositif d'insonorisation selon revendication 2, caractérisé en ce, que la parois arrière (2) acoustiquement close est disposée vis-à-vis du bout (3) ouvert émittant les bruits (9).

4. Dispositif d'insonorisation selon revendication 2, caractérisé en ce, que le tuyau (5) entre dans le creux de la chambre (1) en pénétrant la parois arrière (10) acoustiquement close.

5. Dispositif d'insonorisation selon revendication 3, caractérisé en ce, que le côté acoustiquement ouvert de la chambre (1) est disposé à und distance axiale devant le bout ouvert (3) du tuyau (5) émittant les bruits.

6. Dispositif d'insonorisation selon une des revendications 2 à 5, caractérisé en ce, que pour bruits (9) à une longueur d'onde pricipale (λ) variable il est prévu un dispositif de commande muni d'un détecteur (14) pour mésurer la longueur d'onde principale (λ) et d'un membre (16) de réglage pour l'ajustement automatique de la distance (λ/4) axiale entre le bout ouvert (3) émittant les bruits et la parois arrière (2,10) acoustiquement close.
